# EUROPÄISCHE PATENTSCHRIFT

(11) **EP 2 160 264 B1**
(45) Veröffentlichungstag und Bekanntmachung des Hinweises auf die Patenterteilung: **10.07.2013**
(21) Anmeldenummer: 08758084.1
(22) Anmeldetag: 17.05.2008
(51) Int. Cl.: B23K 1/00, B23K 1/002, B23K 13/01, B23K 13/06, B23K 20/02, B23P 6/00, F01D 5/00, H05B 6/10, H05B 6/40, B23K 101/00

(54) **INDUKTIONSSPULE, VERFAHREN UND VORRICHTUNG ZUR INDUKTIVEN ERWÄRMUNG VON METALLISCHEN BAUELEMENTEN**
INDUCTION COIL, METHOD AND DEVICE FOR THE INDUCTIVE HEATING OF METAL COMPONENTS
BOBINE D'INDUCTION, PROCÉDÉ ET DISPOSITIF DE CHAUFFAGE PAR INDUCTION D'ÉLÉMENTS STRUCTURELS MÉTALLIQUES

(30) Priorität: 14.06.2007 DE 102007027327
(43) Veröffentlichungstag der Anmeldung: 10.03.2010
(73) Patentinhaber: MTU Aero Engines GmbH, 80995 München (DE)
(72) Erfinder: GINDORF, Alexander, 85247 Schwabhausen (DE); HANRIEDER, Herbert, 85411 Hohenkammer (DE); PAPPERT, Hans, A-6330 Kufstein (AT)
(74) Vertreter: Hofstetter, Schurack & Partner
(86) Internationale Anmeldenummer: PCT/DE2008/000842
(87) Internationale Veröffentlichungsnummer: WO 2008/151592

(56) Entgegenhaltungen:
- CH-A- 255 770
- DE-A1-102004 043 746
- FR-A- 2 670 147
- JP-A- 10 302 956
- JP-A- 2000 068 043
- JP-A- 2005 188 481
- US-A- 5 571 437
- US-A- 5 902 507

## Beschreibung

Die vorliegende Erfindung betrifft eine Induktionsspule für ein induktives Nieder - oder Hochfrequenz-Press schweißverfahren, ein Verfahren gemäß dem Oberbegriff der Ansprüche 1 und 8 (siche, z.B., EP 1 112 141 B1 und eine Vorrichtung (siehe Anspruch 13) zur induktiven Erwärmung von metallischen Bauelementen, insbesondere von Bauelementen einer Gasturbine sowie ein mit dem Verfahren hergestelltes Bauteil.

Aus der DE 198 58 702 A1 ist ein weiteres Pressschweißverfahren zum Verbinden von Schaufelteilen einer Gasturbine bekannt, wobei ein Schaufelblattabschnitt und wenigstens ein weiteres Schaufelteil bereitgestellt werden. Dabei werden entsprechende Verbindungsflächen dieser Elemente im Wesentlichen fluchtend beabstandet zueinander positioniert und anschließend durch Erregen eines Induktors mit hochfrequentem Strom und durch Zusammenfahren unter Berührung ihrer Verbindungsflächen miteinander verschweißt. Bei diesem induktiven Hochfrequenzpressschweißen ist die genügend große und homogene Erwärmung der beiden Schweißpartner für die Qualität der Fügestelle von entscheidender Bedeutung.

Weitere induktive Hochfrequenzpressschweißverfahren sind aus der EP 1 112 141 B1 und der EP 1 140 417 B1 bekannt. Dabei werden diese Verfahren zur Reparatur und Herstellung eines integral beschaufelten Rotors für eine Strömungsmaschine beziehungsweise allgemein zum Verbinden von Schaufelteilen einer Gasturbine verwendet. Hierbei wird ein Induktor verwendet, der im Bereich einer Schaufelvorder- und Schaufelhinterkante mit größerem Abstand zur Fügefläche als im Mittenbereich der Schaufel angeordnet ist. Damit soll der induzierte, hochfrequente elektrische Strom die Stirnfläche der zu verbindenden Schaufelteile möglichst gleichmäßig erwärmen und lediglich die stirnflächen- beziehungsweise oberflächennahen Bereiche schmelzflüssig werden lassen.

Grundsätzlich stellt sich bei Verfahren zur induktiven Erwärmung von metallischen Bauelementen das Problem, dass eine gleichmäßige Erwärmung der zu bearbeitenden und verbindenden Bauelemente unabhängig von deren Querschnitt nur sehr schwer erreichbar ist. Zudem sollte die Dicke der so genannten Wärmeeinflusszonen möglichst gering gehalten werden.

Es ist daher Aufgabe der vorliegenden Erfindung eine gattungsgemäße Induktionsspule bereitzustellen, bei der eine gleichmäßige Erwärmung metallischer Bauelemente unabhängig von deren Querschnitt bei einer gleichzeitigen Verkleinerung der Wärmeeinflußzonen gewährleistet ist.

Es ist weiterhin Aufgabe der vorliegenden Erfindung ein Verfahren zur induktiven Erwärmung von metallischen Bauelementen, insbesondere von Bauelementen einer Gasturbine, bereitzustellen, bei dem eine gleichmäßige Erwärmung metallischen Bauelementen unabhängig von deren Querschnitt bei einer gleichzeitigen Verkleinerung der Wärmeeinflußzonen gewährleistet ist.

Es ist weiterhin Aufgabe der vorliegenden Erfindung eine Vorrichtung zur induktiven Erwärmung von metallischen Bauelementen, insbesondere von Bauelementen einer Gasturbine, bereitzustellen, bei der eine gleichmäßige Erwärmung metallischen Bauelementen unabhängig von deren Querschnitt bei einer gleichzeitigen Verkleinerung der Wärmeeinflußzonen gewährleistet ist.

Gelöst werden diese Aufgaben durch eine Induktionsspule gemäß den Merkmalen des Anspruchs 1, einem Verfahren gemäß den Merkmalen des Anspruchs 8 sowie einer Vorrichtung gemäß den Merkmalen des Anspruchs 13.

Vorteilhafte Ausgestaltungen der Erfindung sind in den jeweiligen Unteransprüchen beschrieben.

Eine erfindungsgemäße Induktionsspule zur Verwendung in einem Verfahren zur induktiven Erwärmung von metallischen Bauelementen, insbesondere von Bauelementen einer Gasturbine weist mindestens zwei Wicklungen auf, wobei der Abstand zwischen den einzelnen Wicklungen derart ausgebildet ist, dass das oder die zu erwärmenden Bauelemente zwischen zwei voneinander beabstandeten Wicklungen einführbar sind. Durch die erfindungsgemäße Ausgestaltung der Induktionsspule befindet sich mindestens eine Wicklung über und eine Wicklung unter dem zu bearbeitenden Bauteil beziehungsweise den zu bearbeitenden Bauteilen. Bei bekannten Induktionsspulen wird dagegen in den Wicklungen, d. h. die Wicklungen gehen um das zu bearbeitende Bauteil herum, gearbeitet. Die erfindungsgemäße Induktionsspule erlaubt es, dass der Stromfluss so gelenkt wird, dass er über die zu bearbeitenden Flächen, wie zum Beispiel Verbindungsflächen der Bauelemente wirkt und damit unabhängig vom Querschnitt der Bauteile eine gleichmäßige Erwärmung der gesamten Bearbeitungs- beziehungsweise Fügezone erreicht wird. Vorteilhafterweise kann daher mit sehr hohen Leistungsdichten und sehr kurzer Heizzeit gearbeitet werden, wodurch die Wärmeeinflusszone deutlich verringert wird. Zudem wird durch die erfindungsgemäße Induktionsspule und deren entsprechenden Anordnung gegenüber den Bauelementen ein skalierbarer Prozess unabhängig vom Querschnitt des zu bearbeitenden Bauelements erreicht, aufgrund der sehr gezielten Wärmeeinwirkung und der daraus resultierenden geringen Wärmeeinflusszone können zum Beispiel bessere Festigkeitseigenschaften der Schweißverbindungen erreicht werden. Des Weiteren ermöglicht die erfindungsgemäße Induktionsspule einen Wärmeeintrag in Flächen mit variierender Breite, zudem kann das bearbeitete Bauteil leicht herausgefahren werden, da die Induktionsspule das Bauteil nicht umgibt.

In der erfindungsgemäßen Induktionsspule ist der Abstand zwischen den einzelnen Wicklungen der Geometrie des oder der einzuführenden Bauelemente angepasst. Dadurch ist eine gleichmäßige Erwärmung der metallischen Bauelemente in einem Arbeitsbereich der Induktionsspule gewährleistet. Dabei kann zum Beispiel in einem mittleren Bereich der Induktionsspule der Abstand zwischen der ersten und der zweiten Wicklung größer sein als die Abstände in den Randbereichen der Induktionsspule.

In einer weiteren vorteilhaften Ausgestaltung der Induktionsspule ist diese in dem Arbeitsbereich feldfrei gehalten. Dies kann beispielsweise dadurch erreicht werden, dass ein Übergang von der ersten Wicklung zu der zweiten Wicklung derart gestaltet ist, dass der Strom in der zweiten Wicklung gegenläufig zur ersten Wicklung fließt. Der Übergang bildet dabei eine Art "Kehrschleife". Dadurch ist eine exakte Steuerung des Temperatureintrags in dem Arbeitsbereich gewährleistet.

In einer weiteren vorteilhaften Ausgestaltung der erfindungsgemäßen Induktionsspule weist diese mindestens eine Kühlvorrichtung auf. Durch die Kühlvorrichtung ist gewährleistet, dass es zu keinem An- oder Aufschmelzen der Induktionsspule selbst kommt.

In einer weiteren vorteilhaften Ausgestaltung der erfindungsgemäßen Induktionsspule ist das Verfahren zur induktiven Erwärmung ein induktives Nieder- oder HochfrequenzPressschweißverfahren zum Verbinden von metallischen Bauelementen, insbesondere von Bauelementen einer Gasturbine. Die dabei verwendeten Frequenzen werden aus einem Bereich zwischen 0,05 - 2,5 MHz gewählt. Die erfindungsgemäße Induktionsspule gewährleistet, dass der Stromfluss über die Verbindungsflächen der zu verbindenden Bauelemente wirkt und unabhängig vom Querschnitt der Bauelemente eine gleichmäßige Erwärmung der gesamten Fügezone erzeugt.

In der erfindungsgemäßen Induktionsspule ist zwischen mindestens einer Wicklung und dem oder den Bauelementen im Bereich der zu erwärmenden oder zu verbindenden Abschnitte der Bauelemente zumindest teilweise ein Isolator angeordnet, wobei der Isolator mindestens eine dem oder den Bauelementen zugewandte Fläche aufweist und aus einem Material besteht, welches aufgrund seiner spezifischen Eigenschaften die magnetische Wechselwirkung zwischen der Induktionsspule und den zu erwärmenden Bauelementen nicht wesentlich oder nicht behindert. Zudem kann die Fläche des Isolators von den Wicklungen und/oder dem oder den Bauelementen beabstandet ausgebildet sein. Der Isolator kann beispielsweise aus Glas, insbesondere aus hochtemperaturbeständigem Quarzglas, einer hochtemperaturbeständigen Keramik oder einem hochtemperaturbeständigen Kunststoff bestehen. Vorteilhafterweise bleibt die Induktionsspule bei einem Entstehen von Metalldampf durch die Verdampfung der Oberflächen der zu erwärmenden Bauelemente zuverlässig isoliert, es entsteht kein Plasma und damit kein Kurzschluss zwischen den Bauelementen und der Induktionsspule. Zudem kann der Prozess auch bei einer Metalldampfbildung störungsfrei und kontinuierlich ablaufen, was zum Beispiel bei einer automatischen Serienfertigung von Bauteilen zwingend notwendig ist. Des Weiteren wird erfindungsgemäß die magnetische Wechselwirkung zwischen dem Isolator und den Bauelementen aufgrund einer geeigneten Materialauswahl des Isolators nicht behindert. Durch eine mögliche Beabstandung der Fläche des Isolators von der Induktionsspule beziehungsweise der einzelnen Wicklungen und/oder dem oder den Bauelementen ist gewährleistet, dass es zu keinen Verspannungen zwischen der Induktionsspule und dem Isolator und/oder dem Bauelement und dem Isolator aufgrund von möglichen temperaturabhängigen Unterschieden der Wärmeausdehnung zwischen diesen Elementen kommt.

In weiteren vorteilhaften Ausgestaltungen der erfindungsgemäßen Induktionsspule ist der Isolator schicht- oder folienförmig ausgebildet. Es ist aber auch möglich, dass der Isolator T-förmig ausgebildet ist, wobei eine I-förmige Basis des Isolators in die Wicklung, d.h. in die durch die Wicklung ausgebildete Öffnung eingeführt und in der Wicklung befestigt ist und die dem oder den Bauelementen zugewandte Fläche ungefähr senkrecht zur Basis ausgebildet ist. Vorteilhafterweise ermöglicht die letztgenannte Ausführungsform eine sichere und einfache Fixierung des Isolators an der Induktionsspule. Die dem oder den Bauelementen zugewandte Fläche des Isolators kann wiederum von der Wicklung beabstandet sein.

In der erfindungsgemäßen Induktionsspule ist die Geometrie der dem oder den Bauelementen zugewandten Fläche des Isolators der Geometrie des oder der einzuführenden Bauelemente angepasst. Dadurch ist gewährleistet, dass es zu keiner Behinderung des Einführens des Bauelements in die Induktionsspule kommt.

In einer weiteren vorteilhaften Ausgestaltung der erfindungsgemäßen Induktionsspule weist der Isolator mindestens eine Zuführöffnung oder -leitung für die Zufuhr eines Inertgases zu dem Arbeitsbereich der Induktionsspule auf. Dies trägt zur Qualität der Wärmebehandlung oder der resultierenden Schweißverbindungen bei.

Ein erfindungsgemäßes Verfahren zur induktiven Erwärmung von metallischen Bauelementen, insbesondere von Bauelementen einer Gasturbine umfasst folgende Schritte: Bereitstellung eines oder mehrerer zu erwärmender Bauelemente; Heranführung von mindestens einer Induktionsspule an das oder die Bauelemente oder Heranführen des oder der Bauelemente an die mindestens eine Induktionsspule, wobei die Induktionsspule mindestens zwei Wicklungen aufweist und der Abstand zwischen den einzelnen Wicklungen derart ausgebildet ist, dass das oder die zu erwärmenden Bauelemente zwischen zwei voneinander beabstandete Wicklungen einführbar ist und Einführen des oder der zu erwärmenden Bauelemente zwischen die zwei voneinander beabstandeten Wicklungen; und induktive Erwärmung des Bauelements oder der Bauelemente in einem Arbeitsbereich der Induktionsspule. Das erfindungsgemäße Verfahren gewährleistet, dass es zu einer gleichmäßigen Erwärmung der metallischen Bauelemente unabhängig von deren Querschnitt kommt und gleichzeitig sich eine Verkleinerung der Wärmeeinflusszone ergibt. Im Gegensatz zu den bekannten Verfahren zur induktiven Erwärmung von metallischen Bauelementen arbeitet das erfindungsgemäße Verfahren zwischen den Wicklungen der Induktionsspule, d. h. mindestens eine Wicklung befindet sich über und mindestens eine Wicklung unter dem oder den zu bearbeitenden Bauteilen. Dadurch ergibt sich ein skalierbarer Prozess, der unabhängig von dem Querschnitt des zu bearbeitenden Bauelements arbeitet, wobei aufgrund der sehr gezielten Wärmeeinwirkung und der daraus resultierenden klein ausgebildeten Wärmeeinflusszone insbesondere bei Schweißverbindungen bessere Festigkeitseigenschaften erzielt werden können.

In einer vorteilhaften Ausgestaltung des erfindungsgemäßen Verfahrens ist der Abstand zwischen den einzelnen Wicklungen der Geometrie des oder der einzuführenden Bauelemente angepasst. Damit ist eine gleichmäßige Erwärmung der zu bearbeitenden Bereiche der metallischen Bauelemente gewährleistet. Beispielsweise kann ein mittlerer Bereich der Induktionsspule einen größeren Abstand zwischen der ersten und der zweiten Wicklung aufweisen als die entsprechenden Abstände in den Randbereichen der Induktionsspule.

In einer weiteren vorteilhaften Ausgestaltung des erfindungsgemäßen Verfahrens ist die Induktionsspule in einem Arbeitsbereich feldfrei gehalten. Dies kann beispielsweise dadurch erzielt werden, dass ein Übergang von der ersten Wicklung zur zweiten Wicklung derart gestaltet ist, dass der Strom in der zweiten Wicklung gegenläufig zur ersten Wicklung fließt. Bei dem Übergang handelt es sich dabei um eine Art "Kehrschleife". Dadurch ist eine exakte Steuerung des Wärmeeintrags in das oder die Bauelemente möglich.

In einer weiteren vorteilhaften Ausgestaltung des erfindungsgemäßen Verfahrens ist die induktive Erwärmung gemäß Verfahrensschritt c) ein induktives Nieder- oder HochfrequenzPressschweißverfahren zum Verbinden von metallischen Bauelementen, insbesondere von Bauelementen einer Gasturbine. Die dabei verwendeten Frequenzen können dabei aus einem Bereich zwischen 0,05 - 2,5 MHz gewählt werden. Es ist aber auch möglich, dass die induktive Erwärmung gemäß Verfahrensschritt c) ein induktives Löten zum Verbinden von metallischen Bauelementen ist oder zur Beseitigung von Eigenspannungen von metallischen Bauelementen ausgebildet ist. Das erfindungsgemäße Verfahren ermöglicht eine Vielzahl unterschiedlicher Anwendungsmöglichkeiten im Bereich der induktiven Erwärmung von metallischen Bauelementen. Dabei kann zum Beispiel ein erstes Bauelement eine Schaufel oder ein Teil einer Schaufel eines Rotors in einer Gasturbine und ein zweites Bauelement ein Ring oder eine Scheibe des Rotors oder ein am Umfang des Rings oder der Scheibe angeordneter Schaufelfuß sein. Die Bauelemente können aber auch Teile einer Schaufel eines Rotors in einer Gasturbine sein.

In einer weiteren vorteilhaften Ausgestaltung des erfindungsgemäßen Verfahrens erfolgt im Verfahrensschritt c) die Erwärmung des Bauelements oder der Bauelemente in dem Arbeitsbereich der Induktionsspule temperaturgesteuert. Durch das erfindungsgemäße Verfahren ist eine direkte Zugänglichkeit des Arbeitsbereichs der Induktionsspule, zum Beispiel die Fügezone von zwei Bauelementen ermöglicht. Dadurch können zum Beispiel Pyrometermessungen erfolgen, welche wiederum als Regelgröße im Verfahren verwendet werden können. Dies ist für die Stabilität von Serienprozessen von entscheidender Bedeutung, um die Gefügeausbildung der zu bearbeitenden Bauelemente innerhalb enger Toleranzen zu halten.

Eine erfindungsgemäße Vorrichtung zur induktiven Erwärmung von metallischen Bauelementen, insbesondere von Bauelementen einer Gasturbine weist mindestens einen Generator und mindestens eine Induktionsspule nach einem der Ansprüche 1 bis 7. Im Gegensatz zu üblichen Vorrichtungen zur induktiven Erwärmung erfolgt eine Bearbeitung beziehungsweise ein Erwärmen der Bauelemente zwischen den Wicklungen der Induktionsspule, d. h. mindestens eine Wicklung befindet sich über und mindestens eine Wicklung befindet sich unter den zu bearbeitenden oder zu fügenden Bauelementen. Dadurch kann der Stromfluss so gelenkt werden, dass er über die zu bearbeitenden Flächen beziehungsweise Verbindungsflächen wirkt und damit unabhängig vom Querschnitt der Bauelemente eine gleichmäßige Erwärmung der gesamten Bearbeitungsfläche beziehungsweise Fügezone erreicht wird. Vorteilhafterweise kann somit mit sehr hohen Leistungsdichten und sehr kurzer Heizzeit gearbeitet werden, woraus eine starke Verkleinerung der Wärmeeinflusszone gegenüber der Standardspulenanordnung resultiert. Die Dicke der Wärmeeinflusszone wird etwa halbiert.

Bei einem erfindungsgemäßen Bauteil handelt es sich beispielsweise um ein so genanntes BLING oder BLISK, welche insbesondere mit einem induktiven Nieder- oder Hochfrequenz-Pressschweißverfahren hergestellt worden sind.

Weitere Vorteile, Merkmale und Einzelheiten der Erfindung ergeben sich aus der nachfolgenden Beschreibung eines zeichnerisch dargestellten Ausführungsbeispiels. Dabei zeigen
Figur 1 eine schematische Darstellung einer erfindungsgemäßen Induktionsspule;
Figur 2 eine schematische Darstellung der erfindungsgemäßen Induktionsspule gemäß Figur 1 mit angeordneten Isolatoren;
Figur 3 eine weitere schematische Darstellung der erfindungsgemäßen Induktionsspule gemäß Figur 2;
Figur 4 eine schematische Darstellung einer erfindungsgemäßen Vorrichtung zur induktiven Erwärmung von metallischen Bauelementen; und
Figur 5 eine Vorrichtung gemäß Figur 4, wobei sich die zu fügenden Bauelemente in der Spulanordnung befinden.

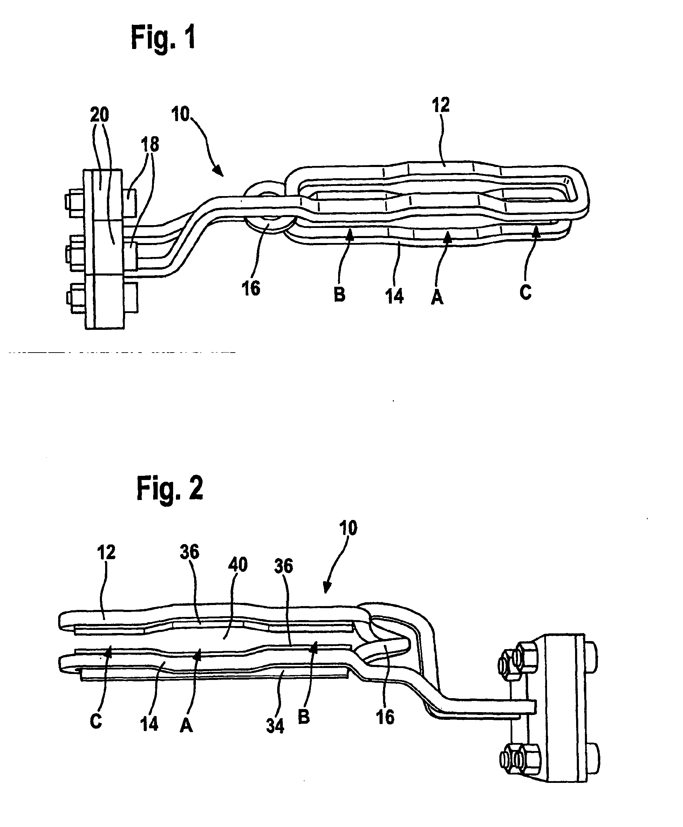

Figur 1 zeigt eine schematische Darstellung einer Induktionsspule 10. Die Induktionsspule 10 dient dabei zur Verwendung in einem Verfahren zur induktiven Erwärmung von metallischen Bauelementen, insbesondere von Bauelementen einer Gasturbine. Man erkennt, dass die Induktionsspule 10 zwei Wicklungen 12, 14 aufweist, wobei der Abstand A, B, C zwischen den Wicklungen 12, 14 derart ausgebildet ist, dass das oder die zu erwärmenden Bauelemente zwischen die zwei voneinander beabstandeten Wicklungen 12, 14 einführbar sind. Um die Einführbarkeit der Bauelemente zu erleichtern und um eine gleichmäßige Erwärmung der eingeführten Bauelemente zu gewährleisten, ist der Abstand A, B, C zwischen den einzelnen Wicklungen 12, 14 der Geometrie der einzuführenden Bauelemente 28, 30 (vergleiche auch Figur 2) angepasst. Man erkennt, dass in einem mittleren Bereich der Induktionsspule 10 der Abstand A zwischen der ersten und der zweiten Wicklung 12, 14 größer ist als die Abstände B, C in den Randbereichen der Induktionsspule 10. Des Weiteren erkennt man, dass ein Übergang 16 von der ersten Wicklung 12 zur zweiten Wicklung 14 als eine Art "Kehrschleife" gestaltet ist, so dass der Strom in der zweiten Wicklung 14 gegenläufig zur ersten Wicklung 12 fließt.

Mittels Befestigungsvornchtung 18 wird die Induktionsspule 10 beziehungsweise die Spulenfüße 20 an einem Gehäuse einer Vorrichtung 22 (vergleiche auch Figur 2) befestigt. Die Induktionsspule 10 besteht üblicherweise aus Kupfer oder einer Kupferlegierung. Auch andere Metall oder Metall-Legierungen können verwendet werden.

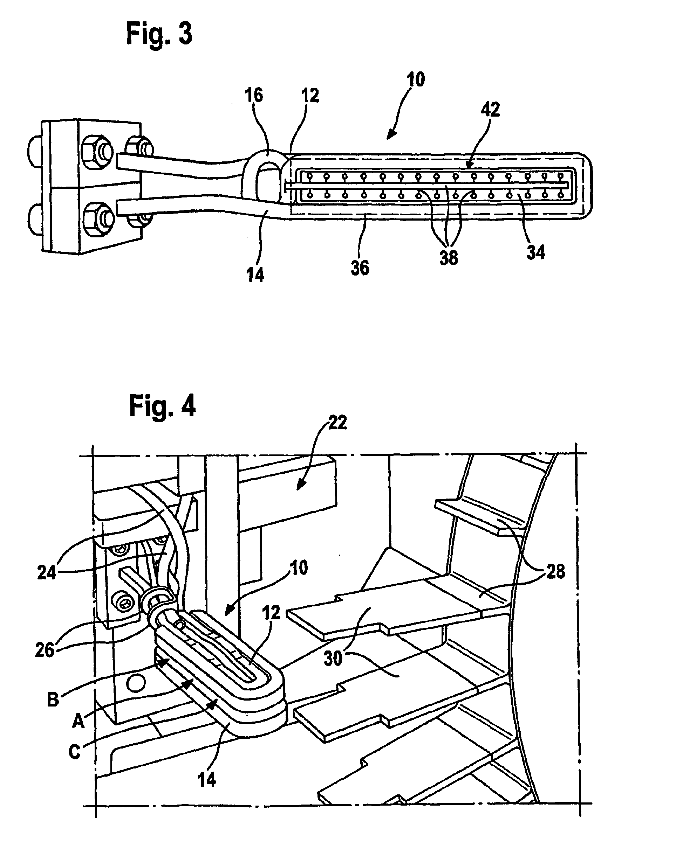

Figur 2 zeigt schematische Darstellung der erfindungsgemäßen Induktionsspule 10 gemäß Figur 1 mit angeordneten Isolatoren 32. Man erkennt, dass zwischen den Wicklungen 12, 14 und einer durch die Abstände A, B, C der beiden Wicklungen 12, 14 zueinander definierten Einführöffnung 40 für das oder die Bauelemente 28, 30 beziehungsweise zwischen den Wicklungen 12, 14 und dem oder den Bauelementen 28, 30 im Bereich der zu erwärmenden oder zu verbindenden Abschnitte der Bauelemente 28, 30 jeweils ein Isolator 32 angeordnet ist. Der Isolator 32 weist dabei eine dem oder den Bauelementen 28, 30 beziehungsweise der Einführöffnung 40 zugewandte Fläche 36 auf. In dem dargestellten Ausführungsbeispiel sind die Isolatoren 32 T-förmig ausgebildet, wobei eine I-förmige Basis 34 des jeweiligen Isolators 32 in die entsprechende Wicklung 12, 14 beziehungsweise eine durch die Wicklung 12, 14 ausgebildete Öffnung 42 (siehe auch Figur 3) eingeführt und in der Wicklung 12, 14 befestigt ist. Die Fläche 36 ist dabei ungefähr senkrecht zur Basis 34 ausgebildet. Des weiteren erkennt man, dass die Geometrie der dem oder den Bauelementen 28, 30 zugewandten Fläche 36 des Isolators 32 der Geometrie des oder der einzuführenden Bauelemente 28, 30 und auch der Geometrie der Wicklungen 12, 14 in diesem Bereich angepasst ist.

Der Isolator besteht aus einem Material, welches aufgrund seiner spezifischen Eigenschaften die magnetische Wechselwirkung zwischen der Induktionsspule 10 und den zu erwärmenden oder zu verbindenden Bauelementen 28, 30 nicht wesentlich oder nicht behindert. Insbesondere kann der Isolator 32 aus Glas, insbesondere aus hochtemperaturbeständigen Quarzglas, einer hochtemperaturbeständigen Keramik oder einem hochtemperaturbeständigen Kunststoff bestehen.

Figur 3 zeigt eine weitere schematische Darstellung der Induktionsspule gemäß Figur 2. Man erkennt die T-förmige Ausgestaltung der Isolatoren 32 sowie deren Befestigung in den Öffnungen 42 der Wicklungen 12, 14. Des Weiteren wird deutlich, dass die Isolatoren 32 Zuführöffnungen und -leitungen 38 für die Zufuhr eines Inertgases zu dem Arbeitsbereich der Induktionsspule 10 aufweisen.

Figur 4 zeigt eine schematische Darstellung der Vorrichtung 22 zur induktiven Erwärmung von metallischen Bauelementen. Man erkennt, dass es sich bei den Bauelementen 28, 30 um einen Schaufelfuß sowie ein Schaufelblatt eines Rotors einer Gasturbine handelt. Dabei wird das Schaufelblatt 30 mit dem Schaufelfuß 28 mittels eines induktiven Hochfrequenz-Pressschweißverfahrens verbunden. Um dies zu erreichen, wird die Fügezone der Bauelemente 28, 30 zwischen die Wicklungen 12, 14 der Induktionsspule 10 geführt. Dies erfolgt entweder durch ein Heranführen der Induktionsspule 10 an die Fügezone der Bauelemente 28, 30 oder ein entsprechendes Einführen der Bauelemente 28, 30 in den Arbeitsbereich der Induktionsspule 10, nämlich in den Bereich zwischen der ersten und zweiten Wicklung 12, 14.

Des Weiteren erkennt man die schlauchartigen Gasführungen 24, die das Schutzgas in den Bereich der Wicklungen 12, 14 der Induktionsspule 10 leiten, um den Fügebereich mittels einer Schutzgasdusche vollständig mit dem inerten Schutzgas zu umgeben und somit von der Umgebungsatmospähre abzukoppeln. Schließlich sind an der Induktionsspule 10 mehrere aus magnetischem Material ausgebildete Ringe 26 angeordnet, die die Erwärmungswirkung des Induktors 10 erhöhen, da sie den eingekoppelten Magnetfluss konzentrieren.

Durch das Ausführungsbeispiel wird deutlich, dass die Vorrichtung 22 sowohl für die Herstellung wie auch die Reparatur von Bauelementen und Bauteilen einer Gasturbine geeignet ist.

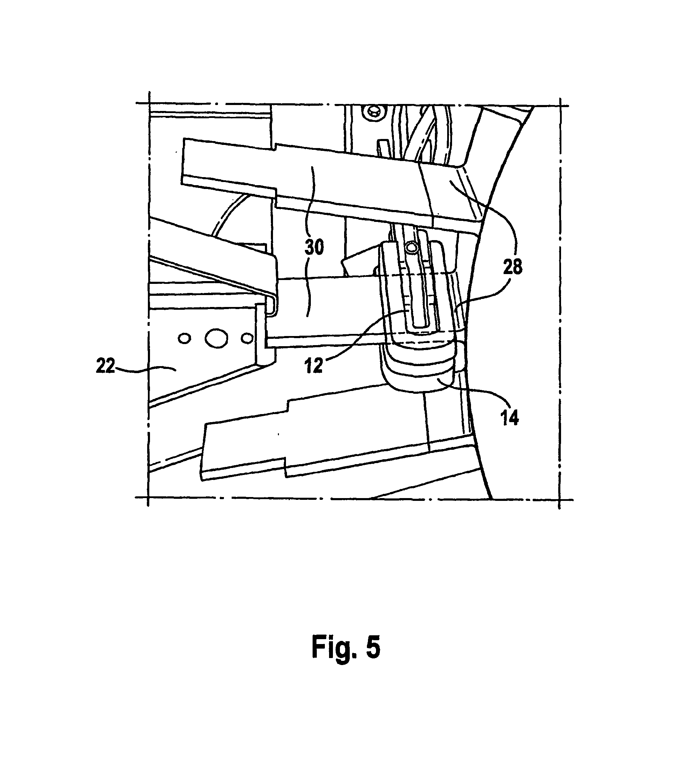

Figur 5 zeigt die schon in Figur 4 dargestellte Vorrichtung 22, wobei hier das Schaufelblatt 30 und der Schaufelfuß 28 sich noch zwischen den Wicklungen 12, 14 befmden. Deutlich ist zu sehen, dass sich die Wicklung 12 vollständig über den Bauelementen 30, 28 befindet, während sich die Wicklung 14 (hier eingepackt in Dämmmaterial) unterhalb der Bauelemente 28, 30 befindet. Somit umgeben die einzelnen Wicklungen 12, 14 die Fügefläche der Bauelemente 28, 30 nicht, vielmehr befinden sie sich jeweils zu beiden Seiten der Fügefläche. Somit ist auch gewährleistet, dass die Spulenanordnung mit beiden Wicklungen 12, 14 zur Seite hin relativ zu den gefügten Bauelementen 28, 30 herausbewegt werden können; ein kompliziertes Ausfädeln entfällt.

## Patentansprüche

1. Induktionsspule für ein induktives Nieder- oder HochfrequenzPressschweißverfahren zum Verbinden von metallischen Bauelementen (28, 30), insbesondere von Bauelementen einer Gasturbine, **dadurch gekennzeichnet, dass** die Induktionsspule mindestens zwei Wicklungen (12, 14) aufweist und der Abstand (A, B, C) zwischen den einzelnen Wicklungen (12, 14) derart ausgebildet ist, dass das oder die zu erwärmenden Bauelemente (28, 30) zwischen zwei voneinander beabstandete Wicklungen (12, 14) einführbar sind, wobei der Abstand (A, B, C) zwischen den einzelnen Wicklungen (12, 14) der Geometrie des oder der einzuführenden Bauelemente (28, 30) angepasst ist, und dass zwischen mindestens einer Wicklung (12, 14) und dem oder den Bauelementen (28, 30) im Bereich der zu erwärmenden oder zu verbindenden Abschnitte der Bauelemente (28, 30) zumindest teilweise ein Isolator (32) angeordnet ist, wobei der Isolator (32) mindestens eine dem oder den Bauelementen (28, 30) zugewandte Fläche (36) aufweist und aus einem Material besteht, welches aufgrund seiner spezifischen Eigenschaften die magnetische Wechselwirkung zwischen der Induktionsspule (10) und den zu erwärmenden Bauelementen (28, 30) nicht wesentlich oder nicht behindert und die Geometrie der dem oder den Bauelementen (28, 30) zugewandten Fläche (36) des Isolators (32) der Geometrie des oder der einzuführenden Bauelemente (28, 30) angepasst ist.

2. Induktionsspule nach Anspruch 1, **dadurch gekennzeichnet, dass** in einem mittleren Bereich der Induktionsspule (10) der Abstand (A) zwischen der ersten und der zweiten Wicklung (12, 14) größer ist als die Abstände (B, C) in den Randbereichen der Induktionsspule (10).

3. Induktionsspule nach einem der vorhergehenden Ansprüche, **dadurch gekennzeichnet, dass** die Induktionsspule (10) in einem Arbeitsbereich feldfrei gehalten ist.

4. Induktionsspule nach Anspruch 3, **dadurch gekennzeichnet, dass** ein Übergang (16) von der ersten Wicklung (12) zur zweiten Wicklung (14) derart gestaltet ist, dass der Strom in der zweiten Wicklung (14) gegenläufig zur ersten Wicklung (12) fließt.

5. Induktionsspule nach Anspruch 4, **dadurch gekennzeichnet, dass** die Fläche (36) des Isolators (32) von der Wicklung (12, 14) und/oder dem oder den Bauelementen (28, 30) beabstandet ist.

6. Induktionsspule nach Anspruch 4 oder 5, **dadurch gekennzeichnet, dass** der Isolator (32) T-förmig ausgebildet ist, wobei eine I-förmige Basis (34) des Isolators (32) in die Wicklung (12, 14) eingeführt und in der Wicklung (12, 14) befestigt ist und die Fläche (36) ungefähr senkrecht zur Basis (34) ausgebildet ist.

7. Induktionsspule nach einem der Ansprüche 4 bis 6, **dadurch gekennzeichnet, dass** der Isolator (32) mindestens eine Zuführöffnung oder -leitung (38) für die Zufuhr eines Inertgases zu dem Arbeitsbereich der Induktionsspule (10) aufweist.

8. Verfahren zum Schweißen und Löten von metallischen Bauelementen, insbesondere von Bauelementen einer Gasturbine, wobei das Verfahren folgende Schritte umfasst:
Bereitstellung eines oder mehrerer zu erwärmender Bauelemente (28, 30);
Heranführung von mindestens einer Induktionsspule (10) an das oder die Bauelemente (28, 30) oder Heranführen des oder der Bauelemente (28, 30) an die mindestens eine Induktionsspule (10), **dadurch gekennzeichnet dass** die Induktionsspule (10) mindestens zwei Wicklungen (12, 14) aufweist und der Abstand (A, B, C) zwischen den einzelnen Wicklungen (12, 14) derart ausgebildet ist, dass das oder die zu erwärmenden Bauelemente (28, 30) zwischen zwei voneinander beabstandete Wicklungen (12, 14) einführbar ist und Einführen des oder der zu erwärmenden Bauelemente (28, 30) zwischen die zwei voneinander beabstandeten Wicklungen (12, 14); und
Induktive Erwärmung des Bauelements oder der Bauelemente (28, 30) in einem Arbeitsbereich der Induktionsspule (10), wobei die induktive Erwärmung gemäß Verfahrensschritt c) ein induktives Nieder- oder HochfrequenzPressschweißverfahren zum Verbinden von metallischen Bauelementen (28, 30), insbesondere von Bauelementen einer Gasturbine oder ein induktives Löten zum Verbinden von metallischen Bauelementen, insbesondere von Bauelementen einer Gasturbine, ist, und der Abstand (A, B, C) zwischen den einzelnen Wicklungen (12, 14) der Geometrie des oder der einzuführenden Bauelemente (28, 30) angepasst ist.

9. Verfahren nach Anspruch 10, **dadurch gekennzeichnet, dass** in einem mittleren Bereich der Induktionsspule (10) der Abstand (A) zwischen der ersten und der zweiten Wicklung (12, 14) größer ist als die Abstände (B, C) in den Randbereichen der Induktionsspule (10).

10. Verfahren nach einem der Ansprüche 10 bis 11, **dadurch gekennzeichnet, dass** die Induktionsspule (10) in einem Arbeitsbereich feldfrei gehalten ist.

11. Verfahren nach Anspruch 12, **dadurch gekennzeichnet, dass** ein Übergang (16) von der ersten Wicklung (12) zur zweiten Wicklung (14) derart gestaltet ist, dass der Strom in der zweiten Wicklung (14) gegenläufig zur ersten Wicklung (12) fließt.

12. Verfahren nach Anspruch 10 bis 13, **dadurch gekennzeichnet, dass** die beim induktiven Nieder- oder Hochfrequenzpressschweißen verwendeten Frequenzen aus einem Bereich zwischen 0,05 - 2,5 MHz gewählt werden.

13. Vorrichtung zur induktiven Erwärmung von metallischen Bauelementen (28, 30) mit mindestens einem Generator und mindestens einer Induktionsspule (10) nach einem der Ansprüche 1 bis 7.

## Claims

1. An induction coil for an inductive low- or high-frequency pressure-welding method for connecting metallic components (28, 30), in particular components of a gas turbine, **characterised in that** the induction coil has at least two windings (12, 14), and the distance (A, B, C) between the individual windings (12, 14) is configured in such a way that the component or components (28, 30) that is/are to be heated can be introduced between two windings (12, 14) that are spaced apart from each other, wherein the distance (A, B, C) between the individual windings (12, 14) is matched to the geometry of the component or components (28, 30) that is/are to be introduced, and **in that** arranged between at least one winding (12, 14) and the component or components (28, 30) in the region of the sections of the components (28, 30) that are to be heated or connected there is at least in part an insulator (32), wherein the insulator (32) has at least one area (36) facing the component or components (28, 30) and is made from a material which on account of its specific properties does not substantially interfere with or does not interfere with the magnetic interaction between the induction coil (10) and the components (28, 30) that are to be heated, and the geometry of the area (36) of the insulator (32) facing the component or components (28, 30) is matched to the geometry of the component or components (28, 30) that is/are to be introduced.

2. An induction coil according to claim 1, **characterised in that** in a central region of the induction coil (10) the distance (A) between the first and the second winding (12, 14) is greater than the distances (B, C) in the edge regions of the induction coil (10).

3. An induction coil according to one of the preceding claims, **characterised in that** the induction coil (10) is kept field-free in a working region.

4. An induction coil according to claim 3, **characterised in that** a transition (16) from the first winding (12) to the second winding (14) is configured in such a way that the current in the second winding (14) flows in the opposite direction to the first winding (12).

5. An induction coil according to claim 4, **characterised in that** the area (36) of the insulator (32) is spaced apart from the winding (12, 14) and/or the component or components (28, 30).

6. An induction coil according to claim 4 or 5, **characterised in that** the insulator (32) is formed in a T-shaped manner, wherein an I-shaped base (34) of the insulator (32) is introduced into the winding (12, 14) and is secured in the winding (12, 14), and the area (36) is formed so as to be approximately perpendicular to the base (34).

7. An induction coil according to one of claims 4 to 6, **characterised in that** the insulator (32) has at least one supply opening or line (38) for the supply of an inert gas to the working region of the induction coil (10).

8. Method for welding and soldering metallic components, in particular components of a gas turbine, wherein the method comprises the following steps:
providing one or more components (28, 30) that is/are to be heated;
advancing at least one induction coil (10) to the component or components (28, 30) or advancing the component or components (28, 30) to the at least one induction coil (10), **characterised in that** the induction coil (10) has at least two windings (12, 14), and the distance (A, B, C) between the individual windings (12, 14) is configured in such a way that the component or components (28, 30) that is/are to be heated can be introduced between two windings (12, 14) that are spaced apart from each other, and introducing the component or components (28, 30) that is/are to be heated between the windings (12, 14) that are spaced apart from each other; and
inductively heating the component or the components (28, 30) in a working region of the induction coil (10), wherein the inductive heating according to method step c) is an inductive low- or high-frequency pressure-welding method for connecting metallic components (28, 30), in particular components of a gas turbine, or inductive soldering for connecting metallic components, in particular components of a gas turbine, and the distance (A, B, C) between the individual windings (12, 14) is matched to the geometry of the component or components (28, 30) that is/are to be introduced.

9. Method according to claim 10, **characterised in that** in a central region of the induction coil (10) the distance (A) between the first and the second winding (12, 14) is greater than the distances (B, C) in the edge regions of the induction coil (10).

10. Method according to one of claims 10 to 11, **characterised in that** the induction coil (10) is kept field-free in a working region.

11. Method according to claim 12, **characterised in that** a transition (16) from the first winding (12) to the second winding (14) is configured in such a way that the current in the second winding (14) flows in the opposite direction to the first winding (12).

12. Method according to claim 10 to 13, **characterised in that** the frequencies used in the inductive low- or high-frequency pressure-welding are selected from a range between 0.05 - 2.5 MHz.

13. A device for inductively heating metallic components (28, 30) having at least one generator and at least one induction coil (10) according to one of claims 1 to 7.

## Revendications

1. Bobine d'induction pour un procédé de soudage par pression à induction haute ou basse fréquence pour l'assemblage de composants métalliques (28, 30), en particulier de composants d'une turbine à gaz, **caractérisée en ce que** ladite bobine d'induction comporte au moins deux enroulements (12, 14) et que l'espacement (A, B, C) entre les différents enroulements (12, 14) est dimensionné de telle manière que le ou les composants (28, 30) à chauffer sont insérables entre deux enroulements (12, 14) espacés l'un de l'autre, l'espacement (A, B, C) entre les différents enroulements (12, 14) étant adapté à la géométrie du ou des composants (28, 30) à insérer, et **en ce qu'**un isolant (32) est au moins partiellement disposé entre au moins un enroulement (12, 14) et le ou les composants (28, 30) au niveau des parties des composants (28, 30) à chauffer ou à assembler, ledit isolant (32) présentant au moins une surface (36) opposée au ou aux composants (28, 30) et étant constituée d'un matériau qui en raison de ses propriétés spécifiques n'empêche pas, ou ne perturbe pas sensiblement l'interaction magnétique entre la bobine d'induction (10) et les composants (28, 30) à chauffer, et **en ce que** la géométrie de la surface (36) de l'isolant (32) opposée au ou aux composants (28, 30) est ajustée à la géométrie du ou des composants (28, 30) à insérer.

2. Bobine d'induction selon la revendication 1, **caractérisée en ce que** dans une zone centrale de la bobine d'induction (10), l'espacement (A) entre le premier et le deuxième enroulements (12, 14) est supérieur aux espacements (B, C) dans les zones de bord de la bobine d'induction (10).

3. Bobine d'induction selon l'une des revendications précédentes, **caractérisée en ce que** ladite bobine d'induction (10) est maintenue à un champ nul dans une zone de travail.

4. Bobine d'induction selon la revendication 3, **caractérisée en ce qu'**une transition (16) du premier enroulement (12) au deuxième enroulement (14) est configurée de telle manière que dans le deuxième enroulement (14), le courant circule dans un sens contraire par rapport au premier enroulement (12).

5. Bobine d'induction selon la revendication 4, **caractérisée en ce que** la surface (36) de l'isolant (32) est espacée de l'enroulement (12, 14) et/ou du ou des composants (28, 30).

6. Bobine d'induction selon la revendication 4 ou la revendication 5, **caractérisée en ce que** l'isolant (32) est réalisé avec une forme en T, une base (34) en forme de I de l'isolant (32) étant insérée dans l'enroulement (12, 14) et fixée dans l'enroulement (12, 14), et la surface (36) étant réalisée sensiblement perpendiculaire à la base (34).

7. Bobine d'induction selon l'une des revendications 4 à 6, **caractérisée en ce que** l'isolant (32) présente au moins une ouverture ou une conduite d'alimentation (38) pour l'amenée d'un gaz inerte dans la zone de travail de la bobine d'induction (10).

8. Procédé de soudage et de brasage de composants métalliques, en particulier de composants d'une turbine à gaz, ledit procédé comprenant les étapes suivantes :
préparation d'un ou de plusieurs composants (28, 30) à chauffer ;
rapprochement d'au moins une bobine d'induction (10) contre le ou les composants (28, 30), ou rapprochement du ou des composants (28, 30) contre la au moins une bobine d'induction (10), **caractérisé en ce que** la bobine d'induction (10) comporte au moins deux enroulements (12, 14) et que l'espacement (A, B, C) entre les différents enroulements (12, 14) est dimensionné de telle manière que le ou les composants (28, 30) à chauffer sont insérables entre deux enroulements (12, 14) espacés l'un de l'autre, et insertion du ou des composants (28, 30) à chauffer entre les deux enroulements (12, 14) espacés l'un de l'autre ; et
chauffage par induction du composant ou des composants (28, 30) dans une zone de travail de la bobine d'induction (10), ledit chauffage par induction suivant l'étape c) étant un procédé de soudage par pression à induction haute ou basse fréquence pour l'assemblage de composants métalliques (28, 30), en particulier de composants d'une turbine à gaz, ou un brasage par induction pour l'assemblage de composants métalliques, en particulier de composants d'une turbine à gaz, et l'espacement (A, B, C) entre les différents enroulements (12, 14) étant adapté à la géométrie du ou des composants (28, 30) à insérer.

9. Procédé selon la revendication 8, **caractérisé en ce que** dans une zone centrale de la bobine d'induction (10), l'espacement (A) entre le premier et le deuxième enroulements (12, 14) est supérieur aux espacements (B, C) dans les zones de bord de la bobine d'induction (10).

10. Procédé selon l'une des revendications 8 à 9, **caractérisé en ce que** la bobine d'induction (10) est maintenue à champ nul dans une zone de travail.

11. Procédé selon la revendication 10, **caractérisé en ce qu'**une transition (16) du premier enroulement (12) au deuxième enroulement (14) est configurée de telle manière que dans le deuxième enroulement (14), le courant circule dans un sens contraire par rapport au premier enroulement (12).

12. Procédé selon les revendications 8 à 11, **caractérisé en ce que** les fréquences utilisées lors du soudage par pression à induction haute ou basse fréquence sont sélectionnées dans une plage de 0,05 à 2,5 MHz.

13. Dispositif pour le chauffage par induction de composants métalliques (28, 30), avec au moins une génératrice et au moins une bobine d'induction selon l'une des revendications 1 à 7.
